# EUROPEAN PATENT APPLICATION

(11) **EP 3 135 116 A1**
(43) Date of publication of application: **01.03.2017**
(21) Application number: 15461563.7
(22) Date of filing: 23.09.2015
(51) Int. Cl.: A23C 9/12, A23C 9/152

(54) **METHOD FOR PRODUCTION OF A FERMENTED GOAT'S MILK BEVERAGE**

(30) Priority: 31.08.2015 PL 41371415
(71) Applicant: Zachodniopomorski Uniwersytet Technologiczny w Szczecinie, 70-310 Szczecin (PL); Szkola Glówna Gospodarstwa Wiejskiego W Warszawie, 02-787 Warszawa (PL)
(72) Inventor: Mituniewicz- Malek, Anna, 71-386 Szczecin (PL); Dmytrów, Izabela, 71-636 Szczecin (PL); Ziarno, Malgorzata, 02-787 Warszawa (PL)
(74) Representative: Zawadzka, Renata

(57) **Abstract**

The method for production of a fermented goat's milk beverage, according the invention, depending on pasteurization, cooling down, and inoculation with a starter culture, is specific in this that the goat's milk, containing from 12.30 wt.% to 14.80 wt.% total solids, including total protein from 3.5 wt.% to 4.2 wt.%, and lipids from 3.5 wt.% to 5.0 wt.%, titratable acidity from 5.4 °SH to 8.5 °SH and pH from 6.50 to 7.30, is inoculated with an activated monoculture probiotic starter of *Bifidobacterium animalis* subsp. *lactis* BB-12 in the amount from 7 wt.% to 10 wt.%, and then incubated at 37-40°C until curd formation. So prepared probiotic fermented goat's milk beverage is cooled down to 5±1 °C, and stored at this temperature until consumption or distribution.

## Description

The invention relates to a method for production of a fermented goat's milk beverage.

In Poland and worldwide, dairy products are made not only from cow's milk, but also from milk of other mammals, including sheep and goat. Goat's milk is a rich source of numerous valuable nutrients, and can be frequently used as a substitute for cow's milk, e.g. for people with recognized allergy to cow's milk protein, or for elderly consumers (and others) suffering from digestive problems caused by cow's milk. On an industrial scale, goat's milk is successfully used for production of cheeses (quarks, rennet cheeses, blue cheeses or soft-ripened cheeses), ultra-heat treated whole milk (UHT), and, most of all, fermented milk beverages, which in a special way retain all beneficial features of goat's milk and additionally contain microflora beneficial for human health.

At present, goat's milk is used mainly for production of traditional fermented beverages - yoghurt and kefir. The beverages require the use of different microflora (starter cultures) during the production process, which means also providing specific conditions for fermentation that is in fact responsible for specific sensory features of the final product. Yoghurt starters are mixtures of two types of bacteria: *Lactobacillus bulgaricus* and *Streptococcus termophilus*, while kefir starters are agglomerations of up to several types of bacteria: *Lactobacillus brevis, Lactobacillus kefir, Lactobacillus plantarum*, *Lactobacillus acidophilus, Leuconostoc lactis, Leuconostoc cermoris, Str. lactis, Str. cremoris, Str. Diacetilactis*, and yeast: *Candida kefir, Saccharomyces inisporus.*

In conventional technologies of yoghurt production, firstly the raw goat's milk is heated (pasteurized) at 85°C for 15 minutes. Next the milk is cooled down to 44°C and inoculated with an activated traditional yoghurt culture containing *L. delbrueckii* subsp. *bulgaricus* and *Str. thermophilus.* The milk, mixed thoroughly with the starter (2-5 wt.%), is then poured to final packages and incubated (fermented) at 44°C till obtaining the pH 4.8. After obtaining the required pH, the ready yoghurt is refrigerated and stored at 5±1°C. Worth noticing is that for the yoghurt produced from goat's milk, the CN102113556 (A) method is known, which is oriented on the preparation of a specialist yoghurt starter providing a product free from the specific goaty aftertaste and odour. There are also methods of kefir production, disclosed in the descriptions UA79441 (U) or RO127073 (A2), that allow for kefir production from both cow's and goat's milk, with the use of Tibetan mushroom. The production starts from normalization (2.5% fat) and pasteurization (85-95°C/ 20-30 min.) of the raw milk (3-5 L). Next, the milk is inoculated with a portion of Tibetan mushroom (300 g), and kept for 12 h at 26°C. After the suggested time, the initially fermented milk is poured into final packages and placed in a thermostat, where a two-stage fermentation proceeds (stage 1: 11-13 h/ 25-27°C, and stage 2: 5-7 h/ 17-19°C).

However, over the last several years there has been a rapid growth in the production and consumption of products containing probiotic strains of confirmed health benefits. Lactic acid bacteria from the genus *Lactobcillus* are considered among the most important probiotic microorganisms, with particular emphasis on: *Lb. acidophilus*, *Lb. paracasei, Lb. rhamnosus*, *Lb. casei*, and *Lb. johnsonie.* In addition, lactic acid bacteria group includes some strains of *Lb. plantarum*, and some strains of the genus *Bifidobacterium,* i.e. *Bifidobacterium bifidum* and *Bifidobacterium longum* [Mituniewicz-Malek A., Dmytrów I., Balejko J., Ziarno M. 2013a. Komercyjne kultury probiotyczne *Lactobacillus sp.* (*Lb. paracasei, Lb. casei* i *Lb. acidophilus*) w napojach fermentowanych z mleka koziego. Żywność. Nauka. Technologia. Jakość. 3 (88), 99-110].

Guided by the needs of the market, which are closely related to the increased consumer awareness concerning healthy diet, industrial producers of fermented cow's and goat's milk proposed the use of a mixture of traditional (thermophile and mesophilic) and probiotic strains. This solution provided to the market potentially probiotic products such as bio-yogurts and bio-kefirs.

In the case of goat's milk, the solution JP2005218388 (A) enables production of a fermented beverage using a starter composed of probiotic microflora represented by *Lactobacillus acidophilus* JCM11O47 and thermophilic microflora. The aim of the proposed solution was to shorten the fermentation time and reduce production costs of the fermented goat's milk beverage.

Moreover, some reports (Borzych-Mończak D. 2011. Probiotyki - dobre dla organizmu ludzkiego. Cukiernictwo, 11, 42-43; Mohania D., Kansal V.K., Nagpal R., Yamashiro Y., Marotta F. 2013. Suppression of diet-induced hypercholesterolemia by probiotic Dahi containing Lactobacillus acidophilus and Lactobacillus plantarum. International Journal of Probiotics and Prebiotics. Vol.8, No. 2/3, 75-84) on fermented goat's milk beverages produced using traditional starters supplemented with probiotic strains reveal that not in all products obtained by this method the probiotic bacteria reached satisfactory viable counts (at least 10⁶ cfu/g) during cold storage, which is crucial for ensuring health promoting properties of these products, that manifest in:
- acidified environment, which inhibits the growth of putrefactive bacteria in the large intestine, thereby preventing various pathogenic infections;
- stimulated secretion of saliva and digestive juices in the stomach and pancreas, which accelerates peristalsis;
- beneficial effect in some bacterial and viral diarrheal diseases;
- reduced severity of radiation-induced diarrhea;
- reduced symptoms of lactose intolerance;
- strengthened immune system;
- increased retention in the body of important mineral nutrients, including phosphorus, calcium and iron;
- cholesterol-lowering effects;
- anticancer activity;
- alleviated symptoms of atopic dermatitis in children, and prevention of allergies in the childhood.

In the publication Mazochi V., Matos Junior F.E., Val C.H., Diniz D.N., Resende A.F., Nicoli J.R. Silva A.M. 2010. Probiotic yogurt produced with goat milk supplemented with Bifidobacterium spp. Arquivo Brasileiro de Medicina Veterinaria e Zootecnia, 62 (6), pp. 1484-1490, a probiotic goat yoghurt has been presented containing various strains of *Bifidobacterium* (*B. longum*, *B. breve, B. pseudolongum*, and *B. bifidum*), supplemented or not with strawberry aroma. The report came to conclusions that the presence of aroma had no effect on the bacteria viable counts, and that regardless the type of probiotic strain used for supplementation the yoghurt starter culture (*Streptococcus thermophiles* and *Lactobacillus delbrueckii* subsp. *bulgaricus*) the number of *Bifidobacterium* spp. in the w final product remained between 10⁶ -10⁸ cfu/g. High counts (10⁸ cfu/g) of probiotics isolated from new born infant faeces *(Lactobacillus acidophilus* and *Lactobacillus paracasei* subsp. *paracasei*) and used for production of a set-type low-fat yogurt from goat's milk was also noted in the publication Xanthopoulos V., Ipsilandis C.G., Tzanetakis N. 2012. Use of a selected multi-strain potential probiotic culture for the manufacture of set-type yogurt from caprine milk. Small Ruminant Research, 106 (2-3), pp. 145-153. The viability of probiotic bacteria in plain yoghurt and stirred fruit yoghurt obtained using goat's milk was also reported in Senaka Ranadheera C., Evans C.A., Adams M.C., Baines S.K. 2012. Probiotic viability and physico-chemical and sensory properties of plain and stirred fruit yogurts made from goat's milk. Food Chemistry, 135 (3), pp. 1411-1418. The publication reveales that *Propionibacterium jensenii* 702 demonstrated the highest viability (10⁸ cfu/g) over 4 weeks of refrigerated storage period in all types of yoghurt. For other strains, the viability of *Bifidobacterium animalis* subsp. *lactic* BB-12 remained also above the therapeutic minimum (10⁶ cfu/g), while the viable counts of *Lactobacillus acidophilus* LA-5 fell below this minimum. Differently, a study on the effect of milk supplementation with inulin, oligosaccharide, polydextrose, fructose and saccharose on the viability of probiotics in fermented goat's milk during refrigerated storage (21 days) revealed that cell counts of *Lactobacillus acidophilus* LA-5 were at a recommended level, but cell counts of *Bifidobacterium animalis* subsp. *lactis* BB-12 fell below the therapeutic minimum (Akpinar A., Yerlikaya O., Torunoglu F.A., Kinik O., Uysal H. 2013. Effect of sweetener supplement: On the viability of Lactobacillus acidophilus LA- 5, Bifidobacterium animalis subsp. lactis Bb 12 and Streptococcus thermophilus St 36 in fermented goat milks during storage. Agro Food Industry Hi-Tech, 24 (6), pp. 19-22).

Possibly, the heterogeneity observed in the literature in the aspect of probiotic bacteria viability in fermented beverages such as bio-yoghurts and bio-kefirs derives notably from the necessity to compete for nutrients among probiotic microflora and thermophilic or mesophilic microflora.

The literature on fermented milk beverages [Mituniewicz-Malek A., Dmytrów I., Balejko J., Ziarno M. 2013. Komercyjne kultury probiotyczne Lactobacillus sp. (Lb. paracasei AD 400, Lb. casei 01, Lb. acidophilus 3) w napojach fermentowanych z mleka koziego. Zywność. Nauka. Technologia. Jakość., 3(88), 99-100] delivers information on the use of commercial probiotic cultures from the genus *Lactobacillus* sp. for production of a new generation fermented goat's milk beverage. Worth noticing is, however, that the studies focused merely on the identification, to what extent particular probiotic strains (*Lb. paracasei* AD 400, *Lb. casei* 01 and *Lb. acidophilus 3*)*,* purchased from various producers, enabled fermentation of goat's milk, so that the final product acquired the specific features of a fermented beverage. The report concluded that some commercial probiotic cultures of *Lactobacillus* sp. enable production of fermented goat's milk beverages that meet the therapeutic minimum (10⁶ cfu/g), but the sensory, physicochemical and rheological features depend on the beverage type and cold storage duration.

There is also a solution available (Mituniewicz-Malek A., Ziarno M., Dmytrów I. 2014. Incorporation of inulin and transglutaminase in fermented goat milk containing probiotic bacteria. Journal of Dairy Science 97 (6) 3332-3338) directed to the information to what extent functional stabilizers such as inulin and microbial transglutaminase (mTGase) used for production of fermented goat's milk affect the viability of starter culture bacteria, in this case *Lactobacillus acidophilus* La-5 and *Bifidobacterium animalis* subsp. *lactic* Bb-12. The study revealed no beneficial effect of the stabilizers on probiotic viable counts in the fermented goat's milk samples. Moreover, a drop in pH reduced bacterial population, bifidobacteria being more sensitive compared to lactic acid bacteria.

Except for the above mentioned publications, the available literature supports no other information on the production of fermented goat's milk using merely a probiotic monoculture, i.e. a starter culture based on a single probiotic bacteria. Fermented goat's milk beverages known so far are usually prepared using mesophilic (kefir) or thermophilic (yoghurt) starter cultures, that can be additionally supplemented with probiotic bacteria (bio-kefir and bio-yoghurt).

However, there are solutions available for the use of cow's milk in the production of two fermented milk beverages having numerous probiotic properties, i.e. acidophilus milk and bifidus milk. According to literature reports, both products are beverages made from normalized or skimmed, pasteurized, high quality milk subjected to fermentation with a starter of pure cultures of *Lbc acidophilus* and *Bifidobacterium* sp., and of acidity up to 60°SH. Unfortunately, due to unattractive sensory features, these products have not gained consumers' interest, and therefore some efforts have been undertaken to modify the process of their production by introducing flavourings such as sugar, honey, vanilla, fruits, salt or vegetables. Despite improvements in the production technology, the acidophilus milk and bifidus milk still have not gained popularity, what happened in case of yoghurt or kefir.

A priority purpose of this invention is to obtain, over the whole cold storage period, a next generation fermented goat's milk beverage, possessing health promoting characteristics, produced with the use of probiotic monoculture starters. The monoculture starters would provide the probiotic viability in the final product above the therapeutic minimum, defined by FAO/WHO as the viable counts of 10⁶ cfu/g, which would result in considering the product as a potentially health promoting. An assumption was made that the effect can by produced when probiotic microflora has no need to compete for nutrients with mesophilic or thermofilic microflora. Another purpose of this invention was to propose the consumers a probiotic fermented goat's milk beverage of acceptable characteristics, i.e. good consistency, and barely perceptible goaty flavour and odour. In the case of goat's milk a problem exists that potential consumes do not tolerate specific quality features of goat's milk and goat's milk products, i.e. specific odour and aftertaste, usually fluid consistency of fermented beverages, or loose curds in cottage cheese. The problem results from the lack of tradition to consume goat's milk and goat's milk products in numerous countries. Consumers accustomed to quality features of cow's milk and cow's milk products expect similar sensory impressions in the case of goat's milk. Unfortunately, although the basic chemical composition of goat's milk is similar to the composition of cow's milk, physicochemical properties of both these types of milk vary considerably. The differences derive from different fat structure, composition and size of casein micellae, percentage of particular fractions of protein, or greater amount of minerals and other nitrogen compounds in goat's milk. The differences affect organoleptic (flavour and odour) and rheological properties of goat's milk products (especially fermented products, that have acidic curds more delicate compared to cow's milk curds). Moreover, chemical composition of goat's milk fluctuates widely during the lactation period, which results in difficulties with obtaining products of similar qualitative features all year round. The literature reports on this subject indicate, that among factors affecting qualitative features of dairy products, with emphasis on fermented beverages, the major factors are: chemical composition and quality of raw material, the method and level of milk enrichment with total solids, technological parameters, and maintaining appropriate conditions during transport and distribution. Moreover, important is to properly select bacterial strains (starter cultures) responsible for milk acidification and regulating desirable sensory features of the end product. According to literature reports, one of the major functions of starter bacterial cultures in dairy products is to improve their rheological properties.

The method for production of a fermented goat's milk beverage according to this invention, depending on pasteurization, cooling down, and inoculation with a starter culture, is specific in that the goat's milk, containing from 12.3 wt.% to 14.8 wt.% total solids (14.24 wt.%), including total protein from 3.5 wt.% to 4.2 wt.% (3.9 wt.%), and lipids from 3.5 wt.% to 5.0 wt.% (4.37 wt.%), titratable acidity from 5.4°SH to 8.5°SH (8.2 °SH) and pH from 6.50 to 7.30 (6.77), is inoculated with an activated probiotic starter of *Bifidobacterium animalis* subsp. *lactis* BB-12 from the genus *Bijidobacterium* in the amount from 7 wt.% to 10 wt.%, and then incubated at 37-40°C until curd formation. So prepared probiotic fermented goat's milk beverage is cooled down to 5±1°C, and stored at this temperature until consumption or distribution.

The advantage of this invention is providing a fermented beverage of probiotic character by the presence of a probiotic monoculture of *Bifidobacterium animalis* subsp. *lactic* BB-12. The final product maintains the recommended viable counts of the probiotic monoculture used (10⁶ cfu/g) over the whole 14-day cold storage period, exhibiting this way the properties of a health promoting beverage. Milk for production of the fermented beverage may come from organic farms or factory farming, but must be modified to obtain the claimed content of total solids, protein, and fat, as well as acidity and pH. The solution according to this invention, which is a new generation fermented goat's milk beverage produced using probiotic monoculture starters of *Bifidobacterium* genus, is a new, innovative product which answers nutritional needs of consumers, in particular those allergic to cow's milk and cow's milk products, and those suffering from digestive problems caused by cow's milk. Another advantage of this solution is obtaining a beverage of good consistency and barely perceptible goaty odour and aftertaste, as a result of goat's milk fermentation with a specified single probiotic strain (monoculture). Obtaining the suggested effects is all the more surprising that, in most cases, fermented goat's milk - obtained using mesophilic, thermophilic or probiotic supplemented starters - has delicate curds, which results in semi-fluid or sometimes even fluid consistency. The observed growing interest of consumers in health promoting lifestyle allows to expect, that the attractiveness of the developed product, deriving from its chemical and microbial composition and specific sensory characteristics (flavour, odour, consistency), will encourage purchase by those consumers, who are looking for potentially health promoting products.

Hereafter, examples of embodiments of the invention will be described.

### Example I

Raw goat's milk from an organic farm, having specific physicochemical properties (average content of total solids 14.24%, including 3.9% total protein and 4.37% lipids, acidity 8.2 °SH, pH 6.77) is pasteurized (heated) using the tank method at 85°C for 20 min. So prepared material is cooled down to 37°C, and inoculated with an activated probiotic monoculture of *Bifidobacterium* genus - *Bifidobacterium animalis* subsp. *lactic* BB-12 (10% of starter). Next, after a thorough mixing, the inoculated milk is poured to consumer containers of 200 mL, sealed and fermented (incubated) in a thermostat. The incubation is conducted at 37°C until curd formation. The final product is cooled down to 5±1°C, and stored up to 2 weeks at this temperature.

### Example II

A fermented goat's milk beverage produced as described in Example **I**, but the milk used has 12.3% total solids content, including 3.5% total protein and 5% lipids, titratable acidity 8.5 °SH, and pH 6.5, and is inoculated with a probiotic monoculture of *Bifidobacterium animalis* subsp. *lactic* BB-12 (7% of starter).

### Example III

A fermented goat's milk beverage produced as described in Example **I**, but the milk used has 14.8% total solids content, including 4.2% total protein and 3.5% lipids, titratable acidity 5.4 °SH, and pH 7.3, and is inoculated with a probiotic monoculture of *Bifidobacterium animalis* subsp. *lactic* BB-12 (8% of starter).

### Example IV

A fermented goat's milk beverage produced as described in Example **I**, but the incubation process leading to curd formation is conducted at 39°C.

### Example V

A fermented goat's milk beverage produced as described in Example **I**, but the incubation process leading to curd formation is conducted at 40°C.

## Claims

1. The method for production of a fermented goat's milk beverage, depending on pasteurization, cooling down, and inoculation with a starter culture, is **characterized in that** the goat's milk, containing from 12.3 wt.% to 14.8 wt.% total solids, including total protein from 3.5 wt.% to 4.2 wt.%, and lipids from 3.5 wt.% to 5.0 wt.%, titratable acidity from 5.4 °SH to 8.5 °SH and pH from 6.50 to 7.30, is inoculated with an activated monoculture probiotic starter of *Bifidobacterium animalis* subsp. *lactis* BB-12 in the amount from 7 wt.% to 10 wt.%, and then incubated at 37-40°C until curd formation, then so prepared probiotic fermented goat's milk beverage is cooled down to 5±1°C.
